# EUROPEAN PATENT APPLICATION

(11) **EP 0 739 929 A2**
(43) Date of publication of application: **30.10.1996**
(21) Application number: 96302662.0
(22) Date of filing: 17.04.1996
(51) Int. Cl.: C08J 3/03, C08L 83/04, C08L 83/14

(54) **Improved physical properties from directly emulsified silicone latices through appropriate surfactant selection**

(30) Priority: 27.04.1995 US 430772
(71) Applicant: DOW CORNING CORPORATION, Midland, Michigan 48686-0994 (US)
(72) Inventor: Joffre, Eric Jude, Midland, Michigan 48642 (US); Kalinowski, Robert Edward, Auburn, Michigan 48611 (US); Lefler III, Harold Vern, Sanford, Michigan 48657 (US); Tselepis, Arthur James, Midland, Michigan 48640 (US); Wolf, Andreas Thomas Franz, Midland, Michigan 48642 (US)
(74) Representative: Lewin, John Harvey

(57) **Abstract**

Physical properties of aqueous polydiorganosiloxane dispersions such as freeze/thaw stability and physical properties of the elastomeric films derived therefrom, such as high temperature heat stability and clarity, are improved by selecting an appropriate surfactant with specific characteristics. Herein, the polydiorganosiloxane dispersion is made through a direct emulsification process. The high temperature stability and clarity of the elastomer formed from our dispersion avoid surfactants which form siloxane redistribution catalysts at temperatures above 100°C. and surfactants which do not produce a matched refractive index of the phases.

## Description

This invention relates to polydiorganosiloxane dispersions which produce elastomeric films having the improved physical properties of freeze/thaw stability, high temperature stability and clarity.

The technical background of this invention is generally represented by: EP-A2 0 463 431; WO 94/09058; WO 94/09059 and US-As 3,355,406; 4,788,001; 5,034,455; 5,037,878; 5,045,231 or 5,145,907.

Furthermore, EP-A2 0 542 498 teaches an aqueous silicone emulsion containing crosslinked polydiorganosiloxane prepared by anionic emulsion polymerization which yields a clear silicone elastomer only when 90% of the dispersed phase particles are less than 1000 nanometers. Contrastingly, US-A 4,704,422 describes a method of improving the freeze/thaw stability of an anionically stabilized silicone latex by adding a combination of nonoxynol-10 and ethylene glycol.

The physical properties of aqueous polydiorganosiloxane dispersions such as freeze/thaw stability and the physical properties of elastomeric films derived therefrom, such as high temperature stability and clarity are improved by selecting an appropriate surfactant with specific characteristics. In particular, we have surprisingly found that the freeze/thaw properties of polydiorganosiloxane dispersions are improved by selecting surfactants that emulsify the polydiorganosiloxane without the presence of certain groups. Our polydiorganosiloxane dispersion is also made through a direct emulsification process. The high temperature stability and clarity of our elastomers formed from this dispersion are specifically improved by surfactants which do not form siloxane redistribution catalysts at temperatures above 100°C. and by surfactants where the refractive index of the crosslinked siloxane phase and the surfactant/residual water phase are matched.

The present invention is successfully employed where the dispersion is derived from a directly emulsified polymer. The techniques for making a dispersion via direct emulsification are disclosed and described in a commonly assigned and copending application of today's date. The subject application bears the Dow Corning Corporation file number of DC 4209 and is entitled "Crosslinked Emulsions with Optimum Consistency and Handling without Thickeners". The corresponding United States Application is serial number 08/430,776 filed on April 27, 1995.

The crosslinked polysiloxane dispersion is formed from a siloxane polymer, polymer mixture or polymer/solvent mixture which is capable of crosslinking via condensation, addition or free radical reactions. The siloxane polymer has a viscosity of 5000 to 500,000 mPa·s (cps). If required, 0.1 to 10 weight parts of a crosslinking agent, and, if required, depending on the nature of the catalyst and silicon cure system, 0.0001 to 5 weight parts of a catalyst, may optionally be added to said dispersion. Other ingredients are 0.5 to 10 weight parts of a surfactant or surfactant mixture and 0.5 to 25 weight parts water per 100 weight parts of siloxane polymer. Optionally, adhesion promoters, pigments, reinforcing or non-reinforcing fillers, silicone or compatible organic resins, compatible functional or non-functional organic polymers, stabilizers, freeze/thaw additives and the like may be added to the dispersion. The dispersion is produced by mixing, as a minimum, the silicone polymer, surfactant and 1-10 parts by weight, preferably 2-6 parts by weight, of water under sufficient shear and for a sufficient period of time to obtain a high solids "oil-in-water" (o/w) emulsion forming a characteristic clear gel phase. This emulsion has at least 90% silicone polymer content and a particle size between 0.1 and 5 micrometers, preferably between 0.2 and 2 micrometers. Crosslinker and catalyst, if required, and optional further ingredients may be added directly to the high solids clear gel phase or after dilution of the clear gel with water to the desired silicone content. Alternatively, either crosslinker or catalyst, or both, as well as one or all of the further optional ingredients may be added to the mixture prior to the emulsification step. In any case, it is important for the practice of the instant invention that a high solids gel is formed first, after the emulsification step and prior to dilution of the emulsion with further water. The crosslinked polysiloxane dispersion is transformed into an elastomer upon the removal of water.

The siloxane polymers or polymer mixtures used as starting materials for the present invention are well known to those skilled in the art. These polymers have a viscosity of between 5000 to 500,000 mPa·s when measured at 25°C. The siloxanes include, for example, polymers described by the following Formula (I):

X₃₋ₙRₙYO(R¹ ₂SiO)_{z}YRₙX₃₋ₙ

where n is 0, 1, 2 or 3 and z is an integer from 500 to 5000, X is hydrogen atom, a vinyl group, a hydroxyl group, any condensable or hydrolyzable group, Y is a Si atom or a Si-(CH₂)ₘ-SiR¹₂ group, with m being a positive integer of 1 to 8. R is individually selected from the group consisting of aliphatic, alkyl, aminoalkyl, polyaminoalkyl, epoxyalkyl, alkenyl or aromatic aryl groups. R¹ is individually selected from the group consisting of X, hydrogen atom, aliphatic, alkyl, alkenyl and aromatic groups.

X is hydrogen atom, a vinyl group, a hydroxyl group or any condensable or hydrolyzable group. The term "hydrolyzable group" means any group attached to the silicon which is hydrolyzed by water at room temperature. The hydrolyzable group of X includes hydrogen atom, halogen atoms such as F, Cl, Br or I; groups of the formula -OY' where Y' is any hydrocarbon or halogenated hydrocarbon group such as methyl, ethyl, isopropyl, octadecyl, allyl, hexenyl, cyclohexyl, phenyl, benzyl, beta-phenylethyl; any hydrocarbon ether group such as 2-methoxyethyl, 2-ethoxyisopropyl, 2-butoxyisobutyl, p-methoxyphenyl or -(CH₂CH₂O)₂CH₃; or any N,N-amino group such as dimethylamino, diethylamino, ethylmethylamino, diphenylamino or dicyclohexylamino. X can also be any amino radical such as NH₂, dimethylamino, diethylamino, methylphenylamino or dicyclohexylamino; any ketoxime radical of the formula -ON=CM₂ or -ON=CM' in which M is any monovalent hydrocarbon or halogenated hydrocarbon radical such as those shown for Y' above and M' is any divalent hydrocarbon radical both valences of which are attached to the carbon, such as hexylene, pentylene or octylene; ureido groups of the formula -N(M)CONM"₂ in which M is defined above hydrocarbon radical such as those shown for Y' above and M" is hydrogen atom or any of the M radicals; carboxyl groups of the formula -OOCMM" in which M and M" are defined above or are halogenated hydrocarbon radicals as illustrated for Y' above or carboxylic amide radicals of the formula -NMC=O(M") in which M and M" are defined above. X is also the sulfate group or sulfate ester groups of the formula -OSO₂(OM) where M is defined above hydrocarbon or halogenated hydrocarbon radical illustrated for Y'; the cyano group; the isocyanate group; and the phosphate group or phosphate ester groups of the formula -OPO(OM)₂ in which M is defined above.

The most preferred groups of the invention are hydroxyl groups or alkoxy groups. Illustrative examples of the alkoxy groups are methoxy, ethoxy, propoxy, butoxy, isobutoxy, pentoxy, hexoxy and 2-ethylhexoxy; dialkoxy radicals such as methoxymethoxy or ethoxymethoxy; and alkoxyaryloxy such as ethoxyphenoxy. The most preferred groups are methoxy or ethoxy.

R is individually selected from the group consisting of aliphatic, alkyl, aminoalkyl, polyaminoalkyl, epoxyalkyl, alkenyl and aromatic aryl groups. Most preferred are the methyl, ethyl, octyl, vinyl, allyl and phenyl groups.

R¹ is individually selected from the group consisting of X, hydrogen atom, aliphatic, alkyl, alkenyl and aromatic groups. Most preferred are methyl, ethyl, octyl, trifluoropropyl, vinyl and phenyl groups.

When the siloxane polymer of formula (I) has an average of more than two condensable or hydrolyzable groups per molecule, it is not necessary to have a crosslinker present to form a crosslinked polymer. The condensable or hydrolyzable groups on different siloxane molecules react with each other to form the required crosslinks.

The siloxane polymer of this invention is a single siloxane represented by the aforesaid formula or mixtures of siloxanes represented by the aforesaid formula or solvent/polymer mixtures. The term "polymer mixture" is meant to include any of these types of polymers or mixtures of polymers.

The siloxane polymer of the present invention can be a mixture of different kinds of molecules, for example, long chain linear molecules and short chain linear or branched molecules. These molecules may react with each other to form a crosslinked network. Such siloxanes, which can take the place of more conventional crosslinkers, are illustrated by low molecular weight organosilicon hydrides, such as polymethylhydrogensiloxane, low molecular weight copolymers containing methylhydrogensiloxy and dimethylsiloxy groups, -(OSi(OEt)₂-, (ethylpolysilicate), (OSiMeC₂H₄Si(OMe)₃)₄ and (OSi(Me)ON=CR'₂)₄, where Me is methyl and Et is ethyl.

The siloxane polymer of our invention also comprises mixtures of siloxane polymers of formula (I), exemplified by mixtures of α-ω-hydroxysiloxy terminated siloxanes and of α-ω-bis(triorganosiloxy) terminated siloxanes, mixtures of α-ω-hydroxylsiloxy terminated siloxanes and of α-hydroxy,ω-triorganosiloxy terminated siloxanes, mixtures of α-ω-dialkoxysiloxy terminated siloxanes and of α-ω-bis(triorganosiloxy) terminated siloxanes, mixtures of α-ω-dialkoxysiloxy terminated siloxanes and of α-ω-hydroxysiloxy terminated siloxanes, mixtures of α-ω-hydroxysiloxy terminated siloxanes and of α-ω-bis(triorganosiloxy) terminated poly(diorgano)(hydrogen-organo)siloxane copolymers and so forth. The siloxane polymer of the invention can also comprise mixtures of siloxane polymers of formula (I) as described above with liquid, branched methylpolysiloxane polymers ("MDT fluids") comprising a combination of recurring units of the formulae:

(CH₃)₃Si_{1/2} (ʺMʺ)

(CH₃)₂SiO (ʺDʺ)

CH₃SiO_{3/2} (ʺTʺ)

and containing from 0.1 to 8% hydroxyl groups. These fluids may be prepared by co-hydrolysis of the corresponding chloro- or alkoxysilanes, as described in US-As 3,382,205; 3,661,817; 3,714,089; 4,356,116; 4,468,760; 5,175,057 or BE-A 0,877,267. The proportion of MDT fluids added should not exceed 50 parts, preferably of 1 to 20 parts by weight, per 100 parts by weight of the polymer of formula (I), to achieve improved physical properties and adhesion of the resultant polymers. The siloxane polymer of this invention can also comprise mixtures of siloxane polymers of formula (I) with liquid or solid, branched methylsiloxane polymeric resins comprising a combination of recurring units of the formulae:

(CH₃)₃Si_{1/2} (ʺMʺ)

(CH₃)₂SiO (ʺDʺ)

CH₃SiO_{3/2} (ʺTʺ)

SiO₂ (ʺQʺ)

and containing from 0.1 to 8% hydroxyl groups. These fluids may also be prepared by cohydrolysis of the corresponding chloro- or alkoxysilanes, as described in US-As 2,676,182; 2,441,320; 4,707,531 and 5,070,175; EP-As 0,529,547 or 0,535,687; DE-A 4,124,588; JP-A 05,098,012 or WO 93/23455. The MDTQ fluid/resin may be added in a proportion not exceeding 50 parts, preferably of 1 to 10 parts by weight, per 100 parts by weight of the polymer of formula (I) to further improve physical properties and adhesion of the resultant polymers. MDTQ fluids/resins can also be mixed with MDT fluids and the polymers of Formula (I). Finally our siloxane polymer can comprise mixtures of siloxane polymers of Formula (I) with compatible organic solvents, to form organic polymer/solvent mixtures. Suitable organic solvents are exemplified by organophosphate esters, such as trioleylphosphate, trioctylphosphate or tetraethyleneglycolmonolauryletherphosphate, as disclosed in US-A 4,147,855 or DE-A 2,802,170; alkanes, such as hexane; heptanes; higher paraffins and aromatic solvents, such as toluene or benzene. These polymer solvent mixtures can also be added with MDT fluids and/or MDTQ fluids to the polymer of Formula I. Any of the above mixtures of polymers or polymer/solvents are prepared by mixing the ingredients prior to emulsification or by emulsifying them individually and then mixing the individual emulsions.

The surfactant of the present invention is selected from nonionic surfactants, cationic surfactants, anionic surfactants, amphoteric surfactants and mixtures thereof. The term "surfactant" is meant to describe a surfactant selected from these categories or a mixture of surfactants from the above referenced categories. The surfactant is present in the composition in an amount of 0.5 to 10 parts by weight, preferably 2 to 10 parts by weight, based on 100 parts by weight of siloxane polymer.

The present invention teaches a method for preparing an aqueous crosslinked silicone dispersion that withstands freeze/thaw cycling. The freeze/thaw stability is achieved though judicious selection of surfactants. In general, surfactants improve the freeze/thaw properties of our resulting elastomers if the surfactant can emulsify the polydiorganosiloxane and if the surfactant is not selected from the group of surfactants of alkyl sulfates, linear alkylbenzene sulfonates, alkyl sulfonates and taurates. In some cases, it may be desirable, if the appropriate surfactant is selected, to exclude filler from the dispersion to achieve freeze/thaw properties. The surfactants which achieve desirable freeze/thaw results include non-ionic surfactants, such as ethoxylated alcohols and esters, polyoxypropylene compounds, amine oxides and fatty acid esters of polyhydric alcohols, cationic surfactants such as monoalkyl and dialkyl quaternary ammonium salts, amphoteric surfactants such as sulfobetaines, silicone surfactants such as silicone polyethers, florosurfactants and certain anionic surfactants such as sulfosuccinamates, paraffin sulfonates, phosphoric esters and carboxylates; sarcosinates. These surfactants or classes of surfactants can all favorably influence the number of freeze/thaw cycles.

Freeze/thaw stability is tested by subjecting the sealant in its original container to 10 freeze/thaw cycles, each cycle consisting of 16 hours at -17°C. ± 1°C. (0°F. ± 2°F.) and 8 hours at 23°C. ± 1°C. (73.4°F. ± 2°F.). After each cycle, a portion of the sealant was extruded and examined for appearance changes. If the extrudate was equivalent to the original unfrozen sealant by not exhibiting coagulation, gels, separation or other manifestations of instability, the sample was deemed to pass that particular freeze/thaw cycle.

Appropriate selection of the surfactant in the present invention can also influence the thermal stability of the elastomeric film resulting from the evaporation of water from the dispersion. Through the judicious selection of surfactant, specifically one whose degradation products at high temperature (such as greater than 100°C.) do not include siloxane redistribution catalysts, heat stable elastomers from aqueous siloxane dispersions can also be made. In some circumstances, it may also be required to exclude fillers to acheive optimum thermal stability.

The surfactants that can be used to improve thermal stability are nonionic, cationic or anionic surfactants, which at elevated temperatures do nqt form siloxane redistribution catalysts. Specifically, the surfactants which form siloxane redistribution catalysts include: 1) strong acidic species such as H₂SO₄, HSO₄Na, H₃PO₄, H₂PO₄Na or 2) strong basic species such as NaOH, KOH and LiOH.

Nonionic, cationic and amphoteric surfactants are preferred since the degradation products of these surfactants do not contain these species. Within the class of anionic surfactants carboxylate and sulfonate are most preferred.

Particular anionic surfactants include monovalent alkyl carboxylates; polyvalent alkyl carboxylates; acyl lactylates; alkyl ether carboxylates; n-acyl sarcosinate; n-acyl glutamates; and fatty acid - polypeptide condensates. Other anionic surfactants are ester linked sulfonates such as alkyl sulfo esters; taurates; sulfosuccinates, such as monoester, diester (both symmetrical and unsymmetrical), ethoxylated monoalkyl sulfosuccinates, alkyl amide 1/2 ester sulfosuccinate (mono/di M⁺) such as 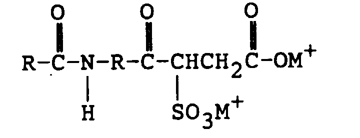 where M⁺ is Na⁺, Li⁺, K⁺ or H⁺ and ethoxylated amide sulfosuccinates; sulfosuccinamates; sulfonated ethers, (Na cocoglycerol ether sulfonate); linear alkylbenzenesulfonates; benzene, toluene, xylene and cumene sulfonates; ligninsulfonates such as sulfonated polymers having number average molecular weights of 1000-20,000; petroleum sulfonates, such as petroleum fractions of differing molecular weight reacted with oleum or H₂SO₄ to sulfonate; paraffin sulfonates, such as sulfoxidation of n-paraffins via UV/SO₃ secondary alkane sulfonates C₁₄-C₁₈ (e.g. Hoechst™ SAS); α-olefin sulfonates; alkylnapthalene-sulfonates; diphenyl oxide sulphonates; and linear alkylpolyethersulfonates.

Specific non-ionic surfactants include ethoxylated alcohols, ethoxylated esters, polysorbate esters and ethoxylated amides; polyoxypropylene compounds such as propoxylated alcohols, ethoxylated/propoxylated block polymers and propoxylated esters; alkanolamides; amine oxides; fatty acid esters of polyhydric alcohols, such as ethylene glycol esters, diethylene glycol esters, propylene glycol esters, glyceryl esters, polyglyceryl fatty acid esters, sorbitan esters, sucrose esters and glucose esters.

Specific cationic surfactants include monoalkyl quaternary ammonium salts, which are hydroxylated, ethoxylated or propoxylated; dialkyl quaternary ammonium compounds; amidoamines; and aminimides. Specific amphoteric surfactants include N-substituted alkyl amides (i.e. fatty acid plus aminoethanolamines e.g. cocoamphoglycinate or cocoamphocarboxyglycinate); N-alkyl betaines, including alkyl amidobetaines; sulfobetaines, such as laurylsultaine, cocoamidopropylhydroxysultaine and N-alkyl-b-aminopropionates, such as lauraminopropionic acids.

Specific silicone surfactants which improve high temperature stability include branched or linear polyoxyalkylenes. Specific flourosurfactants include those selected from anionics (such as carboxylates and sulfonics), non-ionics and amphoterics.

The selection of the surfactant of the present invention can also influence the clarity of the elastomeric film resulting from the evaporation of water from the dispersion. To obtain clear elastomers from silicone latices, the refractive index must be matched in the final film between the crosslinked siloxane phase and the surfactant/residual water phase. The term "crosslinked siloxane phase" refers to the plurality of crosslinked siloxane particles remaining after water has evaporated to form an elastomeric film. The term "surfactant/residual water phase" refers to amount of residual surfactant and water remaining in the elastomeric film after the evaporation of substantially all the water from the dispersion. Fillers are typically absent in clear formulations.

In the absence of refractive index additives, this is accomplished by using nonionic surfactants having the following structure R²-B_{y}-(EO)ₓ where R² is hydrocarbon group having 8 to 18 carbon atoms with the -B_{y}-(EO)ₓ attached either terminally or pendently to the hydrocarbon chain or R² is a group having the formula: 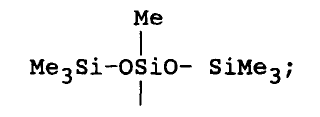 x is an integer from 5 to 15; and y is 1 or 0; B is C(O) or C(O)N-.

In the absence of refractive index additives, this is accomplished by using anionic surfactants with the following structure R³-Z where R³ is an aliphatic hydrocarbon group having 8 to 18 carbon atoms with the Z attached either terminally or pendently to the hydrocarbon chain and Z is anionic hydrophilic group containing sulfate or sulfonate attached directly to the carbon or through taurate, isethionate or succinate linkage.

Specific anionic surfactants that will improve the clarity of the elastomeric film resulting from the composition of the present invention include sulfuric acid esters, such as alkyl sulfates, ethoxylated alkyl sulfates, sulfated triglyceride oils, e.g., sulfated castor oil; ester linked sulfonates, such as alkyl sufo esters (acyl isethionate), taurates and monoester sulfosuccinates; sulfosuccinamates; sulfonated ethers; paraffin sulfonates, i.e. sulfoxidation of n-paraffins via UV/SO₃ secondary alkane sulfonates (e.g. Hoechst™ SAS); α-olefin sulfonates; and linear alkylpolyether sulfonates. Specific non-ionic surfactants that will improve clarity include polyoxyethylene compounds, such as ethoxylated alcohols, ethoxylated esters and ethoxylated amides. Rake or comb type silicone polyether surfactants will also improve the clarity of the film, as will sulfonic and nonionic floro surfactants.

It is apparent that dispersions can also be made having a combination of physical properties, such as freeze/thaw stability and heat stability, freeze/thaw stability and clarity, clarity and heat stability or freeze/thaw stability, clarity and heat stability.

In addition to adding the surfactant to the polysiloxane, polysiloxane polymer mixture, polysiloxane/solvent mixture or polysiloxane/organic polymer mixture, our dispersion also includes a predetermined amount of water. The water is present in the composition in an amount of 0.5 to 200 parts by weight of siloxane polymer and is preferably present in the amount of 6 to 15 parts by weight of siloxane polymer.

After the mixture of siloxane polymer, surfactant and water is formed, the product mixture is emulsified by blending with sufficient shear and for a sufficient time to form a high solids gel phase. Either crosslinker, catalyst or both may be added to the mixture prior to or after emulsification. The mixing will preferably take place at a temperature of 10°C. to 70°C. Further optional ingredients, such as adhesion promoters, pigments, fillers and the like, may be added either prior or after emulsification. If crosslinker, catalyst and/or optional ingredients are added after the emulsification step, they may be added either prior or after diluting the gel phase with water to the desired silicone content. The gel phase will have a silicone content of at least 90%, preferably in the range of 90% to 96%. The gel content may be as high 96-98% silicone content.

For industrial production, any type of mixing equipment may be used to perform the emulsification step, such as batch mixers, planetary mixers, continuous compounders such as single or multiple screw extruders, dynamic or static mixers, colloid mills, homogenizers and sonolators or effective combinations of this equipment, such as sonolators and static mixers, batch mixers and dynamic mixers or dynamic and static mixers may be used.

The high solids gel phase formed by emulsifying siloxane polymer, surfactant and water during the direct emulsification process and having a silicone content of greater than 90% is shelf-stable and can be stored for up to 24 months before use.

After direct emulsification, the gel phase is diluted with water to achieve the desired content of silicone polymer. The silicone content may be as high or low as desired and may include silicone contents of greater than 75%. Generally, amounts of water in the range of 5 to 200 parts by weight is added to achieve a silicone polymer content in the range of 30% to 95%.

Adhesion promoters may be added as an optional ingredient to the compositions of the present invention. They may be added either before or after the emulsification step. If added after the emulsification step, they may be added either before or after diluting the high solids gel phase with water to the desired solids content. Suitable adhesion promoters are silanes of the formula RₙSiX₄₋ₙ where n is 0, 1 or 2 and X is hydrogen atom, a vinyl group, a hydroxyl group or any condensable or hydrolyzable group and R is individually selected from the group consisting of aliphatic, alkyl, aminoalkyl, polyaminoalkyl, epoxyalkyl, alkenyl or aromatic aryl groups.

Silanes or siloxanes particularly useful in addition cure systems are those that have both SiH and SiX functionalities on the same molecule. An example of such a silane is HSiR₂-(SiR¹₂O)ᵤ-SiRₙ,(OCH₃)₃₋ₙ, where u is a positive integer less than 5000 and n' = 0 or 1. R and R¹ are as previously defined above.

The following examples are presented to further illustrate the compositions of this invention. In the examples, the wet dispersions were cast into films one day after the dispersions were made and the film was allowed to dry for a minimum of seven days before testing. Durometer results were obtained by the method described in ASTM C661 "Indentation Hardness of Elastomeric-Type Sealants by Means of a Durometer". Tensile and elongation results were obtained by the method described in ASTM D412 "vulcanized Rubber and Thermoplastic Rubbers and Thermoplastic Elastomers-Tension" using dumbell specimens with an L dimension equal to 1.3 cm (0.5 inch).

The clarity test method was developed to assign a numerical value to the translucency of crosslinked silicone elastomers prepared from silicone latex. The value reported is the thickness through which black, printed letters can be read. The sealant was extruded between two graduated shims. The shims graduate from 0.25 mm to 5.1 mm (0.01" to 0.20"). After two weeks at ambient conditions, the film was placed on white paper containing printing of rows of random letters. The measured thickness at which the letters become difficult to resolve was the clarity value reported. Maximum readings indicate that the letters were readable even at the thickest portion of the film.

### Example 1 (Comparative Example)

Using parts based on siloxane polymer, 100 parts of 50,000 mm²/s (cs) (Mw 110,000) -OH endblocked PDMS polymer and 3.0 parts of sodium lauryl sulfate (SLS) surfactant in powder form were mixed together in a laboratory mixer (Whip™-mix) until the surfactant was evenly distributed. Next, 3.0 parts of deionized water were mixed in until a very high solids gel emulsion was formed. 19 parts of water were added in increments. 0.5 part of dibutyltindilaurate and 1.0 parts of isobutyltrimethoxysilane were then sequentially mixed in. The sample was allowed to stand overnight. The sample did not survive one freeze/thaw cycle.

### Example 2

Using parts based on siloxane polymer, 100.1 parts of the same PDMS polymer of Example 1 and 3.5 parts (3.0 parts active) of an 85.4% solids paste of Stepan™ Polystep B-27, a sodium alkyl phenol ether sulfate, were mixed together in the same laboratory mixer as Example 1. 3.0 parts of water were mixed in until a very high solids gel emulsion was formed. 16.1 parts of water were added in increments. 0.5 part of dibutyltindilaurate and 1.0 part of isobutyltrimethoxysilane were next sequentially mixed in. The sample was allowed to stand overnight. The sample was still a viable dispersion after eight freeze/thaw cycles. The silicone elastomer formed after water evaporation had a tensile strength of 0.27 MPa (39.5 psi) and an elongation of 288%.

### Example 3

Using parts based on siloxane polymer, 100 parts of the PDMS polymer of Example 1 and 3.5 parts (3.3 parts active) of a 94% solids solution of Hamposyl™ C, a cocoyl sarcosinee, were mixed together in the same laboratory mixer of Example 1. Then, 1.5 parts of water and 1.6 parts of 14-15% NH₄OH were added. Next, 2.0 parts of water were mixed in until a very high solids gel emulsion was formed. 17.0 parts of water were added in increments. Later, 0.5 part of dibutyltindilaurate and 1.0 part of isobutyltrimethoxysilane were sequentially mixed in. The sample was allowed to stand overnight. The sample was still a viable dispersion after eight freeze/thaw cycles. The silicone elastomer formed after water evaporation had a tensile strength of 0.16 MPa (23.5 psi) and an elongation of 420%.

### Example 4

Using parts based on siloxane polymer, 100 parts of the same PDMS polymer and 3.0 parts of a paste of Arquad™ S-50, a soyaalkyltrimethyl ammonium chloride, that had been dried at room temperature to a paste, were mixed together in the same laboratory mixer. 4.0 parts of water were mixed in until a very high solids gel emulsion was formed. Next, 0.5 part of dibutyltindilaurate and 1.0 part of isobutyltrimethoxysilane were sequentially added. 20.0 parts of water were added in increments. The sample was allowed to stand overnight. The sample was still a viable dispersion after eleven freeze/thaw cycles. The sample dried to a silicone elastomer after water evaporation.

### Example 5

Using parts based on siloxane polymer, 100 parts of the same PDMS polymer and 3.0 parts of DOW CORNING™ Q2-5212, (ethoxylated trisiloxane, a silicone nonionic surfactant) were mixed together in the same laboratory mixer. 5.0 parts of water were mixed in until a very high solids gel emulsion was formed. 16.1 parts of water were added in increments. Then, 0.5 part of dibutyltindilaurate and 1.0 part of isobutyltrimethoxysilane were sequentially added. The sample was allowed to stand overnight. The sample was still a viable dispersion after eight freeze/thaw cycles. The silicone elastomer formed after water evaporation had a tensile strength of 0.23 MPa (33 psi) and an elongation of 116%.

### Example 6

Using parts based on siloxane polymer, 100 parts of the PDMS polymer of Example 1 and 2.30 parts of Tergitol™ TMN-6, (Union Carbide, Danbury, Ct.) a 90% solution of a secondary alcohol ethoxylate with an HLB of 11.7 and 2.3 parts of water were mixed in the laboratory mixer of Example 1 until a very high solids gel emulsion was formed. 17.7 parts of water were added in increments. Then, 0.5 part of dibutyltindilaurate and 1.0 part of isobutyltrimethoxysilane were sequentially mixed in. The sample was allowed to stand overnight. The sample was still a viable dispersion after ten freeze/thaw cycles. The silicone elastomer formed after water evaporation had 396% swell and 93.06% gel fraction.

### Example 7

Using parts based on siloxane polymer, 100 parts of the PDMS polymer and 2.30 parts of Tergitol™ TMN-10, a 90% solution of a secondary alcohol ethoxylate with an HLB of 14.1 and 2.3 parts of water were mixed in the same laboratory mixer until a very high solids gel emulsion was formed. Next, 17.7 parts of water were added in increments. Then, 0.5 part of dibutyltindilaurate and 1.0 part of isobutyltrimethoxysilane were sequentially added. The sample was allowed to stand overnight. The sample was still a viable dispersion after ten freeze/thaw cycles. The silicone elastomer formed after water evaporation had 379% swell and 95.6% gel fraction.

### Example 8

Using parts based on siloxane polymer, 100 parts of the PDMS polymer and 2.0 parts of Triton™ X-114, (Union Carbide, Danbury, Ct.) a octylphenoxy polyethoxyethanol with an HLB of 12.4 and 2.0 parts of water were mixed in the same laboratory mixer until a very high solids gel emulsion was formed. 17.7 parts of water were added in increments. Next, 0.5 part of dibutyltindilaurate and 1.0 part of isobutyltrimethoxysilane were sequentially added. The sample was allowed to stand overnight. The sample was still a viable dispersion after ten freeze/thaw cycles. The silicone elastomer formed after water evaporation had 374% swell and 92.3% gel fraction.

### Example 9

Using parts based on siloxane polymer, 100 parts of the PDMS polymer of Example 1 and 2.0 parts of Pluronic™ F-68, (BASF, Germany); an EO-PO-EO copolymer with an HLB of >24) and 2.0 parts of water were mixed in the laboratory mixer until a very high solids gel emulsion was formed. 17.7 parts of water were added in increments. Then, 0.5 part of dibutyltindilaurate and 1.0 part of isobutyltrimethoxysilane were sequentially added. The sample was allowed to stand overnight. The sample was still a viable dispersion after ten freeze/thaw cycles. A silicone elastomer formed after water evaporation.

### Example 10

Using parts based on siloxane polymer, 100 parts of the same PDMS polymer and 2.0 parts of an aminoxysiloxane (DC™ 3-5003) were mixed in the same laboratory mixer. Next, 6.0 parts of a 50/50 solution of Tergitol™ TMN-6 and water were mixed in until a very high solids gel emulsion was formed. Then, 0.88 part of a 5% acetic acid solution was added. 4.2 parts of water were added in increments. The sample was allowed to stand overnight. The sample was still a viable dispersion after ten freeze/thaw cycles. A tack free silicone elastomer formed after water evaporation.

### Example 11

Using parts based on siloxane polymer, 100 parts of the PDMS polymer and 4.0 parts of a 50/50 solution of Tergitol™ TMN-6 and water were mixed in a Whip™ Mix laboratory mixer until a very high solids gel emulsion was formed. This was diluted to prepare discrete samples of 95, 90, 85, 80, 70, 60, 50, 40, 30, 20 and 10% silicone solids. Samples were crosslinked using 0.2 part dibutyltindiacetate and 0.8 part isobutyltrimethoxysilane. All samples were still a viable dispersion after ten freeze/thaw cycles. Tack free silicone elastomers were formed after water evaporation.

### Example 12

Using parts based on siloxane polymer, 100 parts of the PDMS polymer were added to a 500 gram Whipmix™ pot. Also added to the pot were 2 grams of the surfactant and 2 grams of tap water.

The mixing blades were placed into the pot and the assembly was sheared at 475 rpm for 30 seconds under 5.7 kPa (23 inches) of vacuum. The mixture phase inverted into a clear, thick, water dispersible gel. The mixing blades were scraped and mixed under the same conditions for an additional 30 seconds. Dilution water (18 grams) was added in two (9 gram) additions under the same mixing conditions.

This 80% solids sealant base was pre-crosslinked by adding 0.5 gram of dibutyl tindilaurate and mixed into the emulsion for 15 seconds under 5.7 kPa (23 inches) of vacuum. Then 1 gram of the crosslinker of isobutyltrimethoxy silane was added and mixed again for 30 seconds under 5.7 kPa (23 inches) of vacuum.

The crosslinked base was packaged into Semco™ cartridges and allowed to gestate for 24 hours to achieve equilibrium physical properties. To obtain samples of cured elastomeric sealant, this material was cast using 1.6 mm (65 mil) shims. Evaluations were made on the cured material after 14 days of drying time.

To test the heat stability of the cured elastomer, samples were removed from the cured rubber casting by using a # 8, 13 mm cork borer. Test specimens were weighed to obtain initial weights and placed into aluminum moisture cups.

Changes in weight were determined by reproving the samples from the 150°C. oven and reweighing to obtain any weight change. The weight change was found by comparing to the initial starting weight. Average values were determined from triplicate samples. The results are reported in Table 1.

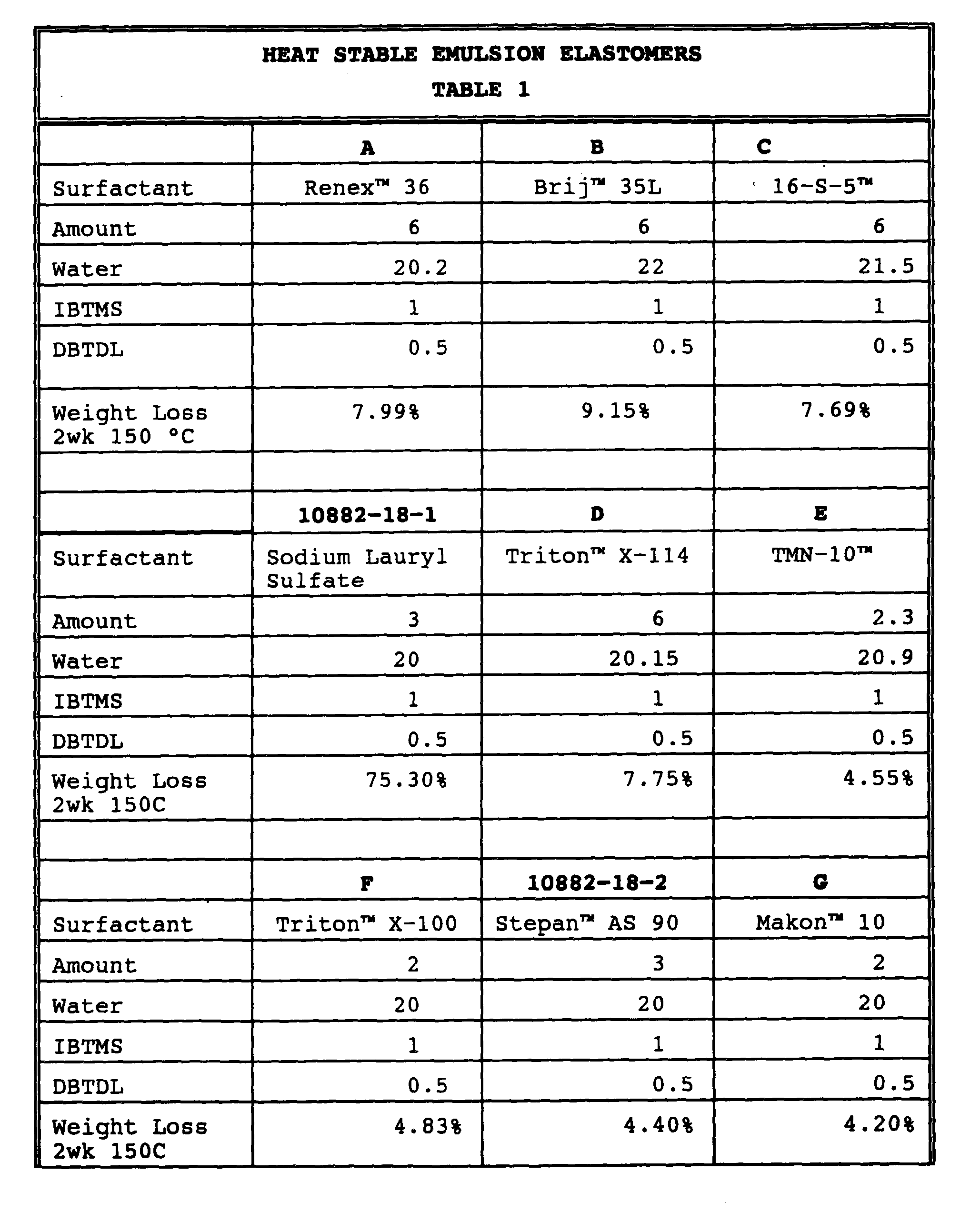

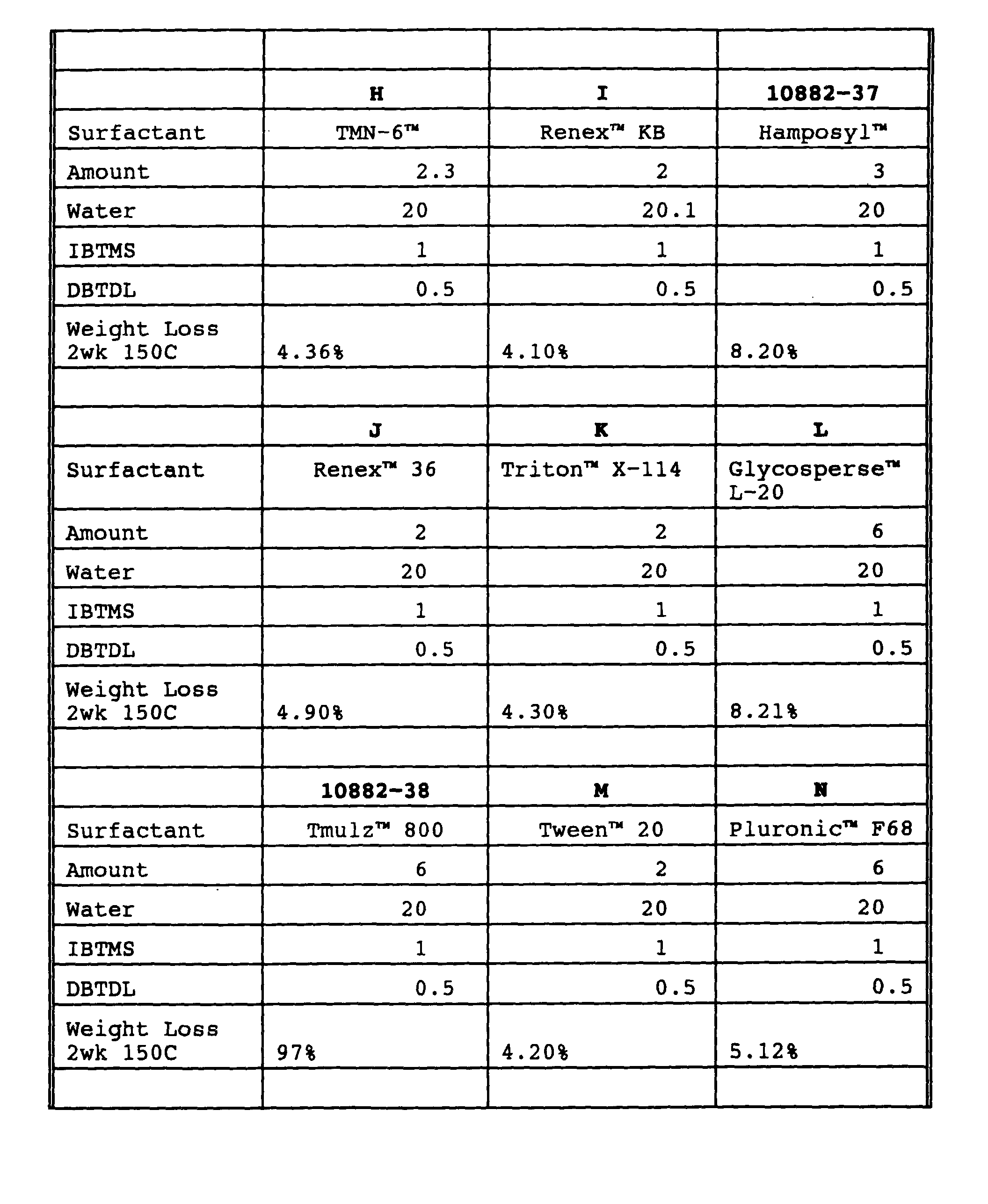

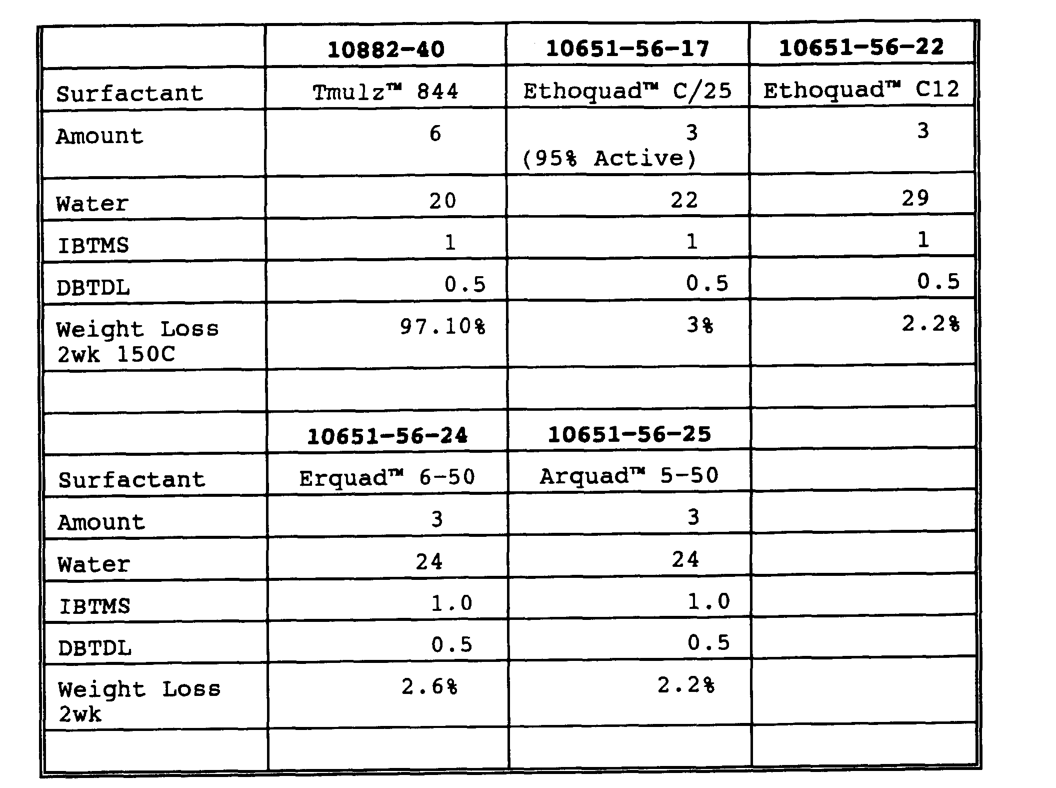

### Example 13

Using parts based on siloxane polymer, 100 parts of the PDMS polymer of Example 1 and 2.30 parts of Tergitol™ TMN-6 and 2.3 parts of water were mixed in the same laboratory mixer as Example 1 until a very high solids gel emulsion was formed. Water was added to prepare a 82% silicone solids emulsion. Then, 0.2 part of dibutyltindilaurate, 1.0 part of isobutyltrimethoxysilane and 50 parts of an 80% solids aqueous slurry of alumina trihydrate (Spacerite™ S-3, Alcoa, Bauxite, AR) were sequentially added. The sample was allowed to stand overnight.

The silicone elastomer formed after water evaporation had a tensile strength of 0.71 MPa (103 psi), an elongation of 1680% and a Shore A durometer of 10. This elastomer lost 4.8% of its weight after being exposed to 150°C. for two weeks.

### Example 14

Using parts based on siloxane polymer, 0.5 part of dibutyltindiacetate was mixed into 100 parts of the PDMS polymer in the same laboratory mixer. Next, 4.0 parts of a 50/50 solution of water and TMN-6™ were added until a very high solids emulsion gel was formed. This emulsion gel was diluted to an 80% silicone solids emulsion. 1 part of tetraethylorthosilicate and 1 part of amionalkoxy polymeric siloxane were then mixed into the diluted emulsion.

This formulation formed a silicone elastomer after water evaporation with a tensile strength of 0.5 MPa (73 psi) and an elongation of 887% and a Shore A durometer of 8. The clarity value equaled 97.

### Example 15

Using parts based on siloxane polymer, 100 parts of 60,000 mm²/s (cs) trimethoxysilane endblocked PDMS polymer were charged to a Whip™ mix laboratory mixer. 4.0 parts of a 50/50 solution of water and TMN-6™ were added until a very high solids emulsion gel was formed. This emulsion gel was diluted to an 80% silicone solids emulsion. Next, 0.5 part of an ethylacetoacetate titanate chelate was mixed into the diluted emulsion.

This formulation formed a silicone elastomer after water evaporation with a tensile strength of 0.3 MPa (44 psi) and an elongation of 583% and a Shore A durometer of 6. The clarity value equaled 100.

### Example 16

Using parts based on siloxane polymer, 100 parts of the PDMS polymer of Example 15 and 1 part of methyltrimethoxysilane were charged to the same laboratory mixer. Next, 4.0 parts of a 50/50 solution of water and TMN-6™ were added until a very high solids emulsion gel was formed. This emulsion gel was diluted to an 80% silicone solids emulsion. Then, 0.5 part of dibutyltindilaurate were mixed into the diluted emulsion.

This formulation formed a silicone elastomer after water evaporation with a tensile strength of 0.46 MPa (67 psi) and an elongation of 363 and a Shore A durometer of 17. The clarity value equaled 162.

## Claims

1. A method of making a silicone latex having a plurality of crosslinked polysiloxane particles, comprising the steps of forming a mixture having (a) 100 weight parts of a siloxane polymer or polymer mixture having a viscosity of between 5000 and 500,000 mPa·s at 25°C., the siloxane polymer or polymer mixture having at least one polymer species of the following Formula (I):
X₃₋ₙRₙ-YO-(R¹ ₂SiO)_{z}-Y-RₙX₃₋ₙ
where n is 0, 1, 2 or 3 and z is an integer from 500 to 5000, X is hydrogen atom, a vinyl group, a hydroxyl group, any condensable or hydrolyzable group, Y is a Si atom or a Si-(CH₂)ₘ-SiR¹₂ group, where m is 1 to 8, R is individually selected from the group consisting of aliphatic, alkyl, aminoalkyl, polyaminoalkyl, epoxyalkyl, alkenyl or aromatic aryl groups and R¹ is individually selected from the group consisting of X, hydrogen atom, aliphatic, alkyl, alkenyl and aromatic groups, (b) 0.5 to 10 weight parts of a surfactant, wherein said surfactant is selected from the group consisting of 1) surfactants which are not alkyl sulfates, linear alkylbenzene sulfonates, alkyl sulfonates and taurates, 2) surfactants which do not form siloxane redistribution catalysts at temperatures above 100°C., and 3) surfactants which when water is evaporated from the silicone latex, the resulting composition having a crosslinked siloxane phase possessing a refractive index and a surfactant/residual water phase also having a refractive index, wherein the refractive index of the crosslinked siloxane phase matches the refractive index of the crosslinked siloxane phase, (c) 0.5 to 200 weight parts of water, emulsifying the mixture into a gel phase having a silicone polymer content of at least 85% by weight; diluting the emulsion with further water, adding up to 5 weight parts of catalyst either before or after the emulsification dr before or after the dilution; and adding up to 20 weight parts of crosslinker either before or after the emulsification or before or after the dilution.

2. The method of claim 1 wherein the siloxane polymer or polymer mixture includes 1 to 50 weight parts of liquid, branched methylpolysiloxane polymers comprising (CH₃)₃Si_{1/2}, (CH₃)₂SiO and CH₃SiO_{3/2} units and containing from 0.1 to 8% hydroxy groups.

3. The method of claim 1 wherein the siloxane polymer or polymer mixture includes 1 to 50 weight parts of branched methylsiloxane polymeric resins comprising (CH₃)₃Si_{1/2}, (CH₃)₂SiO, CH₃SiO_{3/2} and SiO₂ units and containing from 0.1 to 8% hydroxyl groups.

4. The method of claim 1 wherein the siloxane polymer or polymer mixture further includes 1 to 10 weight parts of an organic solvent.

5. The method of claim 1 comprising the additional step of adding up to 10 weight parts of filler.

6. The method of claim 5 wherein said filler is selected from the group consisting of colloidal silica, fumed silica, diatomaceous earth, ground quartz, calcium carbonate, carbon black, titanium dioxide, magnesium hydroxide, clay, aluminum oxide, hydrated alumina, expanded vermiculite, zinc oxide, mica, talc, iron oxide, barium sulfate, slaked lime and mixtures thereof.

7. The method of claim 1 comprising the additional step of adding up to 20 weight parts of adhesion promoter.

8. The method of claim 1 comprising the additional step of adding up to 20 weight parts of stabilizer.

9. The method of claim 8 wherein the stabilizer is added in an amount less than 5 weight parts for each 100 weight parts of siloxane polymer.

10. The method of claim 9 in which the stabilizer is selected from the group consisting of diethylamine, 2-amino-2-methyl-1-propanol and tetramethylbutylguanidine.

11. The method of claim 1 wherein the surfactant is selected from the group consisting of polyoxypropylene compounds, amine oxides and fatty acid esters of polyhydric alcohols, sulfobetaines, silicone polyethers, fluoro-surfactants, sulfosuccinamates, paraffin sulfonates, phosphoric esters and carboxylates.

12. The method of claim 11 wherein the surfactant has the formula R³-Z where R³ is an aliphatic hydrocarbon group having 8 to 18 carbon atoms with the Z attached either terminally or pendently to the hydrocarbon chain and Z is anionic hydrophilic group containing sulfate or sulfonate attached directly to the carbon or through taurate, isethionate or succinate linkage.

13. The composition obtainable by the method of any of claims 1 through 12.
